# EUROPEAN PATENT SPECIFICATION

(11) **EP 3 075 515 B1**
(45) Date of publication and mention of the grant of the patent: **26.09.2018**
(21) Application number: 16161146.2
(22) Date of filing: 18.03.2016
(51) Int. Cl.: B29C 45/17, B23Q 1/01

(54) **INJECTION MOLDING MACHINE**
SPRITZGIESSMASCHINE
MACHINE DE MOULAGE À INJECTION

(30) Priority: 31.03.2015 JP 2015073973
(43) Date of publication of application: 05.10.2016
(73) Proprietor: SUMITOMO HEAVY INDUSTRIES, LTD., Tokyo 141-6025 (JP)
(72) Inventor: MITAMA, Ichiro, Kanagawa 237-8555 (JP); KIKUCHI, Tomoki, Kanagawa 237-8555 (JP); YAMANAKA, Kazuma, Kanagawa 237-8555 (JP)
(74) Representative: Louis Pöhlau Lohrentz

(56) References cited:
- WO-A1-2014/046132
- CN-B- 101 839 074
- CN-U- 203 357 751
- DE-A1- 2 441 805
- DE-A1-102010 048 658
- GB-A- 1 209 990
- JP-A- 2004 148 426

## Description

### BACKGROUND OF THE INVENTION

### Field of the Invention

The present invention relates to an injection molding machine.

### Description of Related Art

Injection molding machines have a mold clamping unit that performs mold closing, mold clamping, and mold opening of a mold unit, an injection unit that fills the inside of the mold unit with a molding material, and a frame that supports the mold clamping unit and the injection unit (for example, refer to Patent Japanese Unexamined Patent Application Publication No. 2000-185335). The mold unit has a stationary mold and a movable mold. The mold clamping unit has a stationary platen to which the stationary mold is attached, and a movable platen to which the movable mold is attached. The mold clamping unit moves the movable platen to the stationary platen, thereby performing mold closing, mold clamping, and mold opening of the mold unit.

A technique capable of reducing the vibration at the time of the operation of the injection molding machine has been desired. DE 24 41 805 A1 discloses an injection molding machine.
GB 1 209 990 discloses improvements in apparatus for blow-moulding hollow articles. WO 2014/046132 A1 discloses a molding machine. CN 203357751 U discloses a cross beam for a vulcanizing machine. JP 2004-148426 discloses a double column machine tool. DE 10 2010 048 658 A1 discloses a frame supporting an injection molding machine. CN 101839074 B relates to steel constructions for building enlargement.

### SUMMARY OF THE INVENTION

The invention has been made in view of the above problems, and a main object thereof is to provide an injection molding machine that can reduce the vibration at the time of the operation of the injection molding machine.

In order to solve the above problems, according to an aspect of the invention defined in claim 1, there is provided an injection molding machine including a mold clamping unit that performs mold closing, mold clamping, and mold opening of a mold unit; an injection unit that fills the interior of the mold unit with a molding material; and a frame that supports at least one of the mold clamping unit and the injection unit. The frame has a beam and a reinforcing member joined to the beam.

According to the invention, the injection molding machine that can reduce the vibration at the time of the operation of the injection molding machine is provided.

### BRIEF DESCRIPTION OF THE DRAWINGS

Fig. 1 is a view illustrating an injection molding machine according to an embodiment of the invention.
Fig. 2 is a cross-sectional view along line II-II in Fig. 1.

### DETAILED DESCRIPTION OF THE INVENTION

Hereinafter, an embodiment for carrying out the invention will be described with reference to the drawings . In the drawings, the same or corresponding components will be designated by the same or corresponding reference signs, and the description thereof will be omitted.

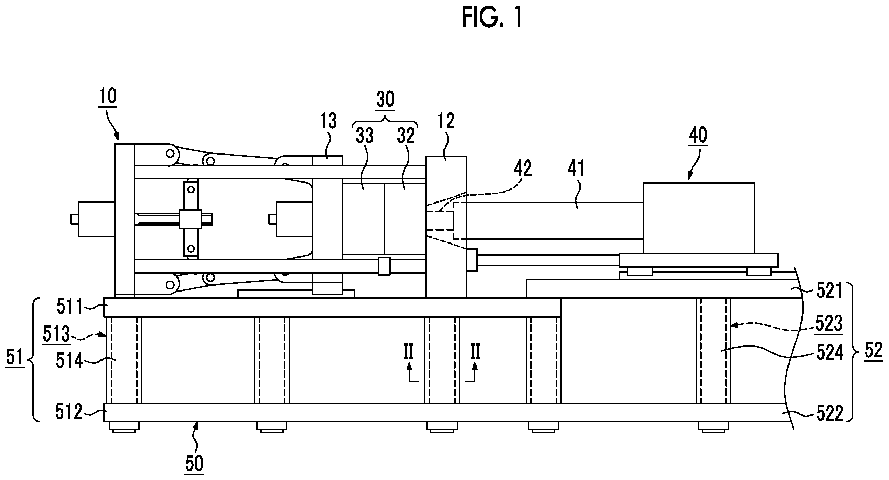

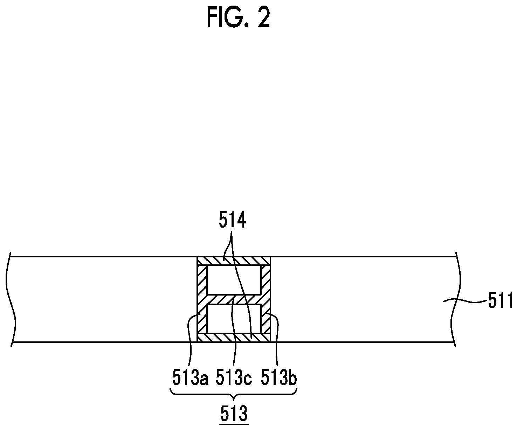

Fig. 1 is a view illustrating an injection molding machine according to an embodiment of the invention. Fig. 2 is a cross-sectional view along line II-II in Fig. 1. The injection molding machine has a mold clamping unit 10, an injection unit 40, a frame 50, and the like.

The mold clamping unit 10 performs mold closing, mold clamping, and mold opening of a mold unit 30. The mold unit 30 is configured to include a stationary mold 32 and a movable mold 33. The mold clamping unit 10 has a stationary platen 12 to which the stationary mold 32 is attached, and a movable platen 13 to which the movable mold 33 is attached. The mold clamping unit 10 moves the movable platen 13 forward and backward with respect to the stationary platen 12, thereby performing the mold closing, the mold clamping, and the mold opening of the mold unit 30.

The injection unit 40 fills the inside of the mold unit 30 in a mold clamping state with a molding material. The injection unit 40 has a cylinder 41 that heats the molding material, and a nozzle 42 provided at the tip of the cylinder 41. The injection unit 40 fills the inside of the mold unit 30 with the molding material melted within the cylinder 41 via the nozzle 42. The molding material filled within the mold unit 30 is hardened, and a molding product is obtained. The molding product is pushed out from the mold unit 30 after mold opening, and is taken out from the injection molding machine.

The frame 50 supports the mold clamping unit 10 and the injection unit 40. The frame 50 may have a mold clamping unit frame 51 and an injection unit frame 52. The mold clamping unit frame 51 supports the mold clamping unit 10. The injection unit frame 52 supports the injection unit 40.

The mold clamping unit frame 51 has an upper horizontal beam 511, a lower horizontal beam 512, and a vertical beam 513. The mold clamping unit 10 is placed on the upper horizontal beam 511, and the lower horizontal beam 512 is installed on a floor. The vertical beam 513 is a pillar parallel to the upward-downward direction, and connects the upper horizontal beam 511 and the lower horizontal beam 512. A cover may be provided in the mold clamping unit frame 51.

The mold clamping unit frame 51 has a vertical beam reinforcing member 514 joined to the vertical beam 513. Although the vertical beam reinforcing member 514 is formed in a plate shape, the shape thereof is not particularly limited. Joining is performed by welding, bolt connection, or the like. Accordingly, the rigidity of the mold clamping unit frame 51 can be improved, and the vibration at the time of the operation of the injection molding machine can be reduced.

In a crosswide sectional view of the vertical beam 513, the vertical beam 513, as illustrated in Fig. 2, may be formed in an H shape, or may have two parallel parts 513a and 513b parallel to each other, and a perpendicular part 513c that connects the two parallel parts 513a and 513b. In the crosswise sectional view of the vertical beam 513, the perpendicular part 513c, as illustrated in Fig. 2, is made parallel to the longitudinal direction (the leftward-rightward direction in Fig. 2) of the upper horizontal beam 511, but may be made parallel to a width direction (the upward-downward direction in Fig. 2) of the upper horizontal beam 511. As the vertical beam 513, for example, H-shaped steel or the like is used. The H-shaped steel has excellent bending strength compared with other shape steels.

The vertical beam reinforcing member 514 may be joined by two parallel parts 513a and 513b, or may be made parallel to the perpendicular part 513c. Although the vertical beam reinforcing member 514 may be provided on one side of the vertical beam 513, as illustrated in Fig. 2, vertical beam reinforcing members may be provided on both sides of the vertical beam 513. As the vertical beam reinforcing members 514 are provided on both sides of the vertical beam 513, a structure in which a rectangular frame is supported by pillars from the inside can be formed. The rectangular frame is configured to include the two parallel parts 513a and 513b and the two vertical beam reinforcing members 514, and the pillar that supports the rectangular frame from inside is configured to include the perpendicular part 513c.

In addition, the structure in which the rectangular frame is supported by the pillar from the inside can also be formed by inserting a vertical beam reinforcing member into an angular pipe-like vertical beam.

Although the vertical beam reinforcing members 514 cover and conceal recesses formed by the two parallel parts 513a and 513b and the perpendicular part 513c in Fig. 1, the vertical beam reinforcing members may not be covered and concealed. For example, the vertical beam reinforcing members 514 are made oblique with respect to the longitudinal direction (upward-downward direction) of the vertical beam 513, and different height parts of two parallel parts 513a and 513b may be connected. Even in this case, the vertical beam reinforcing members 514 may be made parallel to the perpendicular part 513c, in the crosswise sectional view of the vertical beam 513.

In the crosswise sectional view of the vertical beam 513, the vertical beam reinforcing members 514, as illustrated in Fig. 2, may be connected to width-direction ends (upward-downward-direction ends in Fig. 2) of the upper horizontal beam 511 in a case where the vertical beam reinforcing members are parallel to the longitudinal direction of the upper horizontal beam 511. For example, in a case where the upper horizontal beam 511 is formed in a rectangular shape in the crosswise sectional view of the upper horizontal beam 511, the vertical beam reinforcing members 514 are disposed on extension lines of side wall parts of the upper horizontal beam 511. Hence, deflection of the upper horizontal beam 511 caused by the load of the mold clamping unit 10 can be reduced.

Similarly, the vertical beam reinforcing members 514 may be connected to width-direction ends of the lower horizontal beam 512 in a case where the vertical beam reinforcing members are parallel to the longitudinal direction of the lower horizontal beam 512, in the crosswise sectional view of the vertical beam 513. For example, in a case where the lower horizontal beam 512 is formed in a rectangular shape in the crosswise sectional view of the lower horizontal beam 512, the vertical beam reinforcing members 514 are disposed on extension lines of side wall parts of the lower horizontal beam 512. Hence, deflection of the lower horizontal beam 512 caused by the load of the mold clamping unit 10 can be reduced.

The injection unit frame 52 has an upper horizontal beam 521, a lower horizontal beam 522, and a vertical beam 523. The injection unit 40 is placed on the upper horizontal beam 521, and the lower horizontal beam 522 is installed on a floor. The vertical beam 523 is a pillar parallel to the upward-downward direction, and connects the upper horizontal beam 521 and the lower horizontal beam 522. A cover may be provided in the injection unit frame 52.

The upper horizontal beam 521 of the injection unit frame 52 may be disposed at a different stage above the upper horizontal beam 511 of the mold clamping unit frame 51, or for example, may be placed on the upper horizontal beam 511 of the mold clamping unit frame 51.

In addition, although the upper horizontal beam 521 of the injection unit frame 52 of the present embodiment is disposed at a stage different from the upper horizontal beam 511 of the mold clamping unit frame 51, the upper horizontal beam may be disposed at the same height as the upper horizontal beam 511 of the mold clamping unit frame 51. The injection unit frame 52 and the mold clamping unit frame 51 may be integrally formed.

The injection unit frame 52 has a vertical beam reinforcing member 524 joined to the vertical beam 523. The joining of the vertical beam reinforcing member 524 of the injection unit frame 52 is performed similar to the joining of the vertical beam reinforcing members 514 of the mold clamping unit frame 51. Accordingly, the rigidity of the injection unit frame 52 can be improved, and the vibration at the time of the operation of the injection molding machine can be reduced.

Although the embodiment of the injection molding machine has been described above, the invention is not limited to the above-described embodiment, and various alterations and improvements can be made within the scope of the invention described in the claims.

For example, the frame of the injection molding machine may have a reinforcing member joined to a beam in at least one of the mold clamping unit frame and the injection unit frame. Additionally, the beam to which the reinforcing member is joined may be any one or both of a vertical beam and a horizontal beam. The beam to which the reinforcing member is joined may be formed in an H shape in the crosswise sectional view as described above.

A reinforcing member joined to the horizontal beam may be connected to a width-direction end of the vertical beam, in a case where the horizontal beam reinforcing member is made parallel to the longitudinal direction of the vertical beam in a crosswise sectional view of the horizontal beam. For example, in a case where the vertical beam is formed in a rectangular shape in a crosswise sectional view of the vertical beam, the horizontal beam reinforcing member is disposed on an extension line of a side wall part of the vertical beam.

## Claims

1. An injection molding machine comprising:
a mold clamping unit (10) that performs mold closing, mold clamping, and mold opening of a mold unit (30);
an injection unit (40) that fills the interior of the mold unit (30) with a molding material; and
a frame (50) that supports at least one of the mold clamping unit (10) and the injection unit (40),
wherein the frame (50) has a beam (513) and a reinforcing member (514) joined to the beam (513), and wherein the frame (50) comprises a lower horizontal beam (512) and an upper horizontal beam (511, 521) and multiple vertical beams (513, 523) and wherein the reinforcing member (514) is joined to a vertical beam (513) of the frame (50), **characterized in that** the vertical beams (513, 523) are formed in an H shape in a crosswise sectional view of the vertical beam (513, 523), whereby each vertical beam (513, 523) has two parallel parts (513a, 513b) and a perpendicular part (513c) that connects the two parallel parts (513a, 513b), and
wherein the reinforcing member (514) is joined to the two parallel parts (513a, 513b) and is made parallel to the perpendicular part (513c).

2. The injection molding machine according to Claim 1,
wherein the reinforcing member (514) is joined to a horizontal beam (511, 512, 521) of the frame (50).

3. The injection molding machine according to any one of Claims 1 or 2,
wherein the frame (50) comprises a mold clamping unit frame (51) supporting the mold clamping unit (10) and a injection unit frame (52) supporting the injection unit (40) .

4. The injection molding machine according to any one of Claims 1 to 3,
wherein the vertical beams (513, 523) are made of H-shaped steel.

5. The injection molding machine according to any one of Claims 3 or 4,
wherein the frame (50) comprises a first upper horizontal beam (511) supporting the mold clamping unit (10) and a second upper horizontal beam (521) supporting the injection unit (40).

6. The injection molding machine according to Claim 5,
wherein the upper horizontal beam (521) of the injection unit frame (52) is disposed at a different stage above the upper horizontal beam (511) of the mold clamping unit frame (51).

## Patentansprüche

1. Spritzgießmaschine, die Folgendes umfasst:
eine Formklemmeinheit (10), die das Schließen der Form, das Festklemmen der Form und das Öffnen der Form einer Formeinheit (30) durchführt;
eine Einspritzeinheit (40), die den Innenraum der Formeinheit (30) mit einer Gießmasse befüllt; und
einen Rahmen (50), der die Formklemmeinheit (10) und/oder die Einspritzeinheit (40) trägt,
wobei der Rahmen (50) einen Träger (513) und ein Verstärkungselement (514), das mit dem Träger (513) verbunden ist, aufweist und wobei der Rahmen (50) einen unteren, horizontalen Träger (512) und einen oberen, horizontalen Träger (511, 521) sowie mehrere vertikale Träger (513, 523) umfasst und wobei das Verstärkungselement (514) mit einem vertikalen Träger (513) des Rahmens (50) verbunden ist, **dadurch gekennzeichnet, dass** die vertikalen Träger (513, 523) in einer Querschnittsansicht des vertikalen Trägers (513, 523) in einer H-Form ausgebildet sind, wobei jeder vertikale Träger (513, 523) zwei parallele Komponenten (513a, 513b) und eine senkrechte Komponente (513c), die die zwei parallelen Komponenten (513a, 513b) verbindet, aufweist, und
wobei das Verstärkungselement (514) mit den zwei parallelen Komponenten (513a, 513b) verbunden ist und parallel zur senkrechten Komponente (513c) hergestellt ist.

2. Spritzgießmaschine nach Anspruch 1,
wobei das Verstärkungselement (514) mit einem horizontalen Träger (511, 512, 521) des Rahmens (50) verbunden ist.

3. Spritzgießmaschine nach einem der Ansprüche 1 oder 2,
wobei der Rahmen (50) einen Rahmen (51) der Formklemmeinheit, der die Formklemmeinheit (10) trägt, und einen Rahmen (52) der Einspritzeinheit, der die Einspritzeinheit (40) trägt, umfasst.

4. Spritzgießmaschine nach einem der Ansprüche 1 bis 3,
wobei die vertikalen Träger (513, 523) aus einem Stahl in einer H-Form hergestellt sind.

5. Spritzgießmaschine nach einem der Ansprüche 3 oder 4,
wobei der Rahmen (50) einen ersten oberen, horizontalen Träger (511), der die Formklemmeinheit (10) trägt, und einen zweiten oberen, horizontalen Träger (521), der die Einspritzeinheit (40) trägt, umfasst.

6. Spritzgießmaschine nach Anspruch 5, wobei der obere, horizontale Träger (521) des Rahmens (52) der Einspritzeinheit an einer anderen Stufe über dem oberen, horizontalen Träger (511) des Rahmens (51) der Formklemmeinheit angeordnet ist.

## Revendications

1. Machine de moulage par injection comprenant :
une unité de serrage de moule (10) qui réalise la fermeture du moule, le serrage du moule et l'ouverture du moule d'une unité de moule (30) ;
une unité d'injection (40) qui remplit l'intérieur de l'unité de moule (30) avec un matériau de moulage ; et
un bâti (50) qui supporte au moins l'une parmi l'unité de serrage de moule (10) et l'unité d'injection (40),
dans laquelle le bâti (50) a une poutre (513) et un élément de renforcement (514) assemblé à la poutre (513), et dans laquelle le bâti (50) comprend une poutre horizontale inférieure (512) et une poutre horizontale supérieure (511, 521) et plusieurs poutres verticales (513, 523) et dans laquelle l'élément de renforcement (514) est assemblé à une poutre verticale (513) du bâti (50), **caractérisée en ce que** les poutres verticales (513, 523) sont formées selon une forme de H sur une vue en coupe transversale de la poutre verticale (513, 523), moyennant quoi chaque poutre verticale (513, 523) a deux parties parallèles (513a, 513b) et une partie perpendiculaire (513c) qui raccorde les deux parties parallèles (513a, 513b), et
dans laquelle l'élément de renforcement (514) est assemblé aux deux parties parallèles (513a, 513b) et est rendu parallèle à la partie perpendiculaire (513c).

2. Machine de moulage par injection selon la revendication 1,
dans laquelle l'élément de renforcement (514) est assemblé à une poutre horizontale (511, 512, 521) du bâti (50).

3. Machine de moulage par injection selon l'une quelconque des revendications 1 ou 2,
dans laquelle le bâti (50) comprend un bâti d'unité de serrage de moule (51) supportant l'unité de serrage de moule (10) et un bâti d'unité d'injection (52) supportant l'unité d'injection (40).

4. Machine de moulage par injection selon l'une quelconque des revendications 1 à 3,
dans laquelle les poutres verticales (513, 523) sont réalisées avec de l'acier en forme de H.

5. Machine de moulage par injection selon l'une quelconque des revendications 3 ou 4,
dans laquelle le bâti (50) comprend une première poutre horizontale supérieure (511) supportant l'unité de serrage de moule (10) et une seconde poutre horizontale supérieure (521) supportant l'unité d'injection (40).

6. Machine de moulage par injection selon la revendication 5,
dans laquelle la poutre horizontale supérieure (521) du bâti d'unité d'injection (52) est disposée à un étage différent au-dessus de la poutre horizontale supérieure (511) du bâti d'unité de serrage de moule (51).
